# EUROPÄISCHE PATENTSCHRIFT

(11) **EP 2 035 479 B1**
(45) Veröffentlichungstag und Bekanntmachung des Hinweises auf die Patenterteilung: **07.07.2010**
(21) Anmeldenummer: 07730178.6
(22) Anmeldetag: 15.06.2007
(51) Int. Cl.: C08G 65/00

(54) **VERFAHREN ZUR KONTINUIERLICHEN HERSTELLUNG VON POLYETHERALKOHOLEN**
PROCESS FOR THE CONTINUOUS PRODUCTION OF POLYETHER ALCOHOLS
PROCÉDÉ DE FABRICATION EN CONTINU DE POLYÉTHERALCOOLS

(30) Priorität: 23.06.2006 EP 06115946
(43) Veröffentlichungstag der Anmeldung: 18.03.2009
(73) Patentinhaber: BASF SE, 67056 Ludwigshafen (DE)
(72) Erfinder: OSTROWSKI, Thomas, 68199 Mannheim (DE); ADAM, Johannes, 01099 Dresden (DE); MECKELNBURG, Dirk, 67063 Ludwigshafen (DE); MAHN, Ulrike, 68165 Mannheim (DE); JOVANOVIC, Renata, 67061 Ludwigshafen (DE); LÖFFLER, Achim, 67346 Speyer (DE)
(86) Internationale Anmeldenummer: PCT/EP2007/055934
(87) Internationale Veröffentlichungsnummer: WO 2007/147780

(56) Entgegenhaltungen:
- EP-A1- 0 419 419
- WO-A-2004/081082
- DE-A1- 10 008 630

## Beschreibung

Gegenstand der Erfindung ist ein kontinuierliches Verfahren zur Herstellung von Polyetheralkoholen.

Polyetheralkohole werden in großen Mengen hergestellt und vielseitig verwendet. Ihre Herstellung erfolgt zumeist durch Anlagerung von Alkylenoxiden an H-funktionelle Startsubstanzen. Die Anlagerung erfolgt üblicherweise in Anwesenheit von Katalysatoren, insbesondere basischen Verbindungen, wie Aminen oder Alkalihydroxiden, oder von Multimetallcyanidverbindungen, auch als DMC-Katalysatoren bezeichnet.

Haupteinsatzgebiet der Polyetheralkohole ist die Herstellung von Polyurethanen. Je nach den Anforderungen an die Eigenschaften der Polyurethane können sich die Polyetheralkohole in ihrer Funktionalität, dem Molgewicht und den eingesetzten Startsubstanzen stark unterscheiden.

Derzeit werden Polyetheralkohole überwiegend in Batch- oder Semibatchfahrweise hergestellt. Eine Ausnahme bilden die DMC-Katalysatoren. Da diese Katalysatoren das Wachstum kurzer Ketten gegenüber längeren Ketten begünstigen, können Polyetheralkohole auch nach einem kontinuierlichen Verfahren hergestellt werden. Hierbei werden in einen kontinuierlichen Reaktor, beispielsweise einen kontinuierlichen Rührkessel oder einen Rohrreaktor, kontinuierlich Startsubstanz und Alkylenoxide dosiert und das Fertigprodukt kontinuierlich entnommen. Derartige Verfahren sind beispielsweise in WO 98/03571 oder in DD 204 735 beschrieben. Diese Verfahren sind jedoch auf DMC-Katalysatoren beschränkt. Nach der DMC-Fahrweise können jedoch nur Polyetheralkohole unter Verwendung von flüssigen Startsubstanzen hergestellt werden, wie sie zur Herstellung von Polyurethan-Weichschaumstoffen eingesetzt werden. Die Anlagerung von Alkylenoxiden an feste Startsubstanzen oder an aromatische Amine, wie sie als Startsubstanzen zur Herstellung von Polyetheralkoholen für die Anwendung in Polyurethan-Hartschaumstoffen eingesetzt werden, ist mit DMC-Katalysatoren nicht möglich.

Es wäre wünschenswert, ein gegenüber dem derzeit üblichen Semibatch-Verfahren verbessertes Verfahren zur Herstellung von Hartschaum-Polyetheralkoholen zu finden. Die bei dieser Verfahrensweise notwendigen relativ großen Reaktoren in Folge der langen Rüst- und Entleerzeiten bestimmen maßgeblich die Investitionskosten der Produktionsanlagen. Weiterhin werden Ventile, Pumpen und Motoren aufgrund der wechselnden Belastungen stark belastet. Gerade bei der Herstellung von Polyolen auf Basis von Zucker sind zudem starke Motoren, Getriebe und Rührerachsen notwendig, um die Zuckerslurry intensiv mit den Alkylenoxiden mischen zu können. Die Semi-Batch-Fahrweise kann zudem von Charge zu Charge Schwankungen in der Produktqualität bewirken.

Auch während der Alkoxylierung zeigt die semi-batch Fahrweise Nachteile. Meist wird der Zucker mit einem Co-Starter, wie Glyzerin, Diethylenglykol, Triethanolamin, Dipropylenglykol oder Wasser zu einem Slurry vermischt. Anschließend wird das Alkylenoxid zudosiert. Insbesondere zu Beginn des Prozesses ist allerdings das Propylenoxid praktisch unlöslich in der Zucker-Slurry. Daher treten anfangs hohe Drücke im Reaktor auf, so dass unter Umständen die Dosierung des Alkylenoxids abgestellt werden muss. Weiterhin werden unterschiedliche Alkoxylierungsgrade beobachtet.

Die Umstellung dieser Fahrweise auf eine kosteneffizientere kontinuierliche Fahrweise ist nicht direkt möglich. Da es sich bei der alkalisch katalysierten Propoxylierung um eine lebende Polymerisation handelt, ist die direkte Umstellung der semi-batch Technologie, wie dies zum Beispiel im Falle der DMC-Katalyse möglich und in US 5698012 beschrieben ist, nicht möglich. Vielmehr werden in diesem Fall breite Molekulargewichtsverteilungen beobachtet

In WO 00136514, WO 00136088 und WO 00136513 werden Rohrreaktoren beschrieben, die auch zur Herstellung von Hartschaumpolyetheralkoholen verwendet werden können. Um hier eine vollständige Umsetzung zu erreichen, müssen die Rohrreaktoren sehr lang ausgelegt werden.

Die Verwendung von Strömungsrohrreaktoren würde zwar zu schmalen Molekulargewichtsverteilungen führen, allerdings kann die Slurry aus Zucker und Costarter schwierig und, sofern überhaupt, nur sehr aufwändig durch die Rohrleitungen gepumpt werden. Die Probleme der Nicht-Mischbarkeit von Alkylenoxid- und Zuckerphase und, in der Folge, die geringe Reaktionsgeschwindigkeiten aufgrund niedriger Konzentration bleiben zudem bestehen. Weiterhin sind zahlreiche Dosierstellen notwendig, um den Reaktor sicher betreiben und die Reaktionstemperatur kontrollieren zu können.

Es bestand daher die Aufgabe, ein verbessertes Verfahren zur kontinuierlichen Herstellung von Polyetheralkoholen, insbesondere solchen für die Herstellung von Polyurethan-Hartschaumstoffen, bereitzustellen, das zu Produkten mit einer engen Molgewichtsverteilung führt, einfach und betriebssicher betrieben werden kann und auch den Einsatz fester Startsubstanzen ermöglicht.

Die Aufgabe konnte überraschenderweise dadurch gelöst werden, dass die Umsetzung der Startsubstanz mit dem Alkylenoxid in einem rückvermischten kontinuierlichem Rührkessel (CSTR) erfolgt.

Gegenstand der Erfindung ist demzufolge ein Verfahren zur kontinuierlichen Herstellung von Polyetheralkoholen durch Umsetzung von H-funktionellen Startsubtanzen mit Alkylenoxiden unter Verwendung basischer Katalysatoren, dadurch gekennzeichnet, dass mindestens eine Startsubstanz mit mindestens einem Alkylenoxid kontinuierlich in einen rückvermischten Rührkesselreaktor dosiert werden, und das Umsetzungsprodukt kontinuierlich dem Rührkesselreaktor entnommen wird.

Vorzugsweise ist mindestens eine Startsubstanz mindestens 4-funktionell.

Der Begriff "4-funktionell" bedeutet, dass die Verbindung mindestens 4 reaktionsfähige Wasserstoffatome aufweist.

Die als Startsubstanzen vorzugsweise eingesetzten mindestens 4-funktionellen Verbindungen sind insbesondere ausgewählt aus den üblicherweise zur Herstellung von Polyetheralkoholen eingesetzten Verbindungen. Vorzugsweise handelt es sich um aliphatische, insbesondere Ethylendiamin, und aromatische Amine, insbesondere Toluylendiamin (TDA) und Mischungen aus Isomeren des Diphenylmethandiisocyanats und seinen höheren Homologen (MDA), um Mischungen von aromatischen und aliphatischen Aminen oder um feste OH-funktionelle Verbindungen, wie Pentaerithrit, Kohlehydrate, bevorzugt Stärke, Cellulose und besonders bevorzugt Zucker, insbesondere Sorbit, Mannit, Glucose, Fructose und Saccharose. Auch die Verwendung von Melamin und dessen H-funktionellen Derivaten ist möglich

Da ein Teil der mindestens 4-funktionellen Startsubstanzen bei den Reaktionstemperaturen fest und, insbesondere im Falle der Zucker und hier besonders der Saccharose, auch nicht zersetzungsfrei schmelzbar ist, sollten für die kontinuierliche Dosierung dieser Substanzen besondere Vorkehrungen getroffen werden.

So ist es prinzipiell zwar möglich, diese Verbindungen als Feststoffe dem Reaktor zuzuführen, beispielsweise über ein Rohr. Dies kann jedoch, insbesondere im Falle der Saccharose, zu Verklumpungen und Verstopfungen in den Rohren führen. Weiterhin ist es möglich, die feste Startsubstanz in einem Lösungsmittel, wie Wasser, zu lösen oder in bei Verarbeitungstemperatur flüssigen Verbindungen zu suspendieren und in dieser Form dem Reaktor zuzuführen. Die Zuführung kann über Pumpen oder, insbesondere im Falle von hochviskosen Suspensionen, über Schneckenförderer, beispielsweise Excenterschneckenpumpen, Schraubenspindelpumpen oder andere zwangsfördernde Pumpen, erfolgen.

Bei den bei Verarbeitungstemperatur flüssigen Verbindungen kann es sich um niedermolekulare Verbindungen, insbesondere 2- oder 3-funktionelle Verbindungen mit aktiven Wasserstoffatomen, insbesondere Alkohole, wie Ethylenglykol, Propylenglykol oder Glyzerin handeln. In einer Ausführungsform des erfindungsgemäßen Verfahrens handelt es sich dabei um ein Zwischen- oder das Endprodukt des Verfahrens. Dieses kann, insbesondere durch die Entfernung von Wasser oder dem Katalysator, aufgearbeitet sein, es kann sich jedoch auch um das Rohprodukt handeln. Es ist auch möglich, zwei bis vierfunktionelle Polyetherole mit Molekulargewichten zwischen 200 und 600 g/mol als Co-Starter einzusetzen. Diese Polyetherole können sowohl katalysatorfrei sein als auch Katalysator enthalten. Es kann hier auch ein anderer Katalysator verwendet werden als im eigentlichen kontinuierlichen Verfahren. Es ist daher auch denkbar, einen weiteren Katalysator durch die Verwendung des alkalischen zusätzlichen Polyetherols in die Reaktion einzubringen.

In einer Ausführungsform des erfindungsgemäßen Verfahrens wird bei der Verwendung von festen Startsubstanzen dem kontinuierlichen rückvermischten Rührkesselreaktor ein Reaktor vorgeschaltet, in dem die feste Startsubstanz durch Anlagerung einer geringen Menge von Alkylenoxid verflüssigt und dieses Vorprodukt kontinuierlich dem kontinuierlichen rückvermischten Reaktor zudosiert wird. Bei diesem Reaktor kann es sich um einen kontinuierlichen oder einen diskontinuierlichen Reaktor handeln. Bei Verwendung eines diskontinuierlichen Reaktors in dieser Vorstufe wird das Vorprodukt üblicherweise in Lagertanks zwischengelagert und von dort kontinuierlich dem rückvermischten Reaktor zugeführt werden. Bei Verwendung eines kontinuierlichen Reaktors in dieser Vorstufe kann das Vorprodukt direkt dem rückvermischten Reaktor zudosiert oder ebenfalls in Lagertanks zwischengelagert und von dort kontinuierlich dem rückvermischten Reaktor zugeführt werden. Die notwendige Menge an Alkylenoxide, die an die feste Startsubstanz, insbesondere die Saccarose, angelagert wird, ist variabel. Ziel ist es, so viel Alkylenoxid anzulagern, dass die feste Startsubstanz verflüssigt wird.

Es ist auch möglich, einen Teil des Fertigprodukts, vor oder nach der Entfernung des Katalysators, als Co-Starter einzusetzen. Mit dieser Produktrückführung wird erreicht, dass der feste Starter in einer größeren Masse an flüssigem Starter dispergiert wird.

Besonders vorteilhaft kann diese Vorstufe eingesetzt werden, wenn die Startsubstanz in der im kontinuierlichen rückvermischten Rührkesselreaktor vorliegenden Reaktionsmischung zunächst unlöslich ist und erst nach der Anlagerung von Alkylenoxid löslich wird, wie beispielsweise im Falle der Saccharose

Bei dem kontinuierlichen rückvermischten Reaktor handelt es sich um einen kontinuierlichen Rührkesselreaktor.

Der kontinuierliche rückvermischte Rührkessel kann einzeln oder als Kaskade ausgeführt werden. Die Reaktorgröße richtet sich nach der notwendigen Verweilzeit und kann vom Fachmann wie üblich ermittelt werden. Sie ist vorzugsweise mindestens so zu wählen, dass der gewünschte Alkoxylierungsgrad erreicht wird, bei dem sich der zugegebene feste Starter in dem Reaktionsmedium löst.

Die Wärmeabfuhr bei der exothermen Alkoxylierung kann über einen externen Wärmetauscher erfolgen. Um zu vermeiden, dass Restzucker in die weiteren Prozessschritte transportiert wird, kann das Produkt aus dem externen Kühlkreislauf nach passieren einer Querstromfiltrationseinheit entnommen werden. Der zuckerhaltige Strom wird wieder in den Rührkessel zurückgeführt, während der zuckerhaltige Produktstrom in den weiten Verfahrensschritt geleitet wird.

In einer Ausführungsform des erfindungsgemäßen Verfahrens wird der fertige Polyetheralkohol dem rückvermischten Reaktor entnommen.

In einer anderen Ausführungsform des erfindungsgemäßen Verfahrens schließt sich an den kontinuierlichen Rückvermischten Rührkesselreaktor ein weiterer kontinuierlicher Reaktor an. Dabei kann es sich ebenfalls um einen rückvermischten Reaktor, vorzugsweise jedoch um einen Rohrreaktor handeln. Dieser wird im folgenden auch als Nachreaktor bezeichnet.

In einer Ausführungsform dient dieser Nachreaktor der vollständigen Umsetzung des im Austrag aus dem kontinuierlichen rückvermischten Reaktor noch vorhandenen Alkylenoxids. In dieser Ausführungsform wird in den Nachreaktor kein Alkylenoxid dosiert. Falls erforderlich, kann dem Reaktionsgemisch vor oder während der Reaktion im Nachreaktor weiterer Katalysator zugesetzt werden. Dabei kann es sich um den gleichen oder einen anderen Katalysator handeln wie im kontinuierlichen rückvermischten Rührkesselreaktor.

Es ist auch möglich, den nachgeschalteten Reaktor so auszulegen, dass der feste Starter vollständig umgesetzt wird und kein Gehalt an festem Starter mehr im Produkt verbleibt. Überschüssig vorhandenes Alkylenoxid kann dann abgestrippt werden.

In einer weiteren Ausführungsform des erfindungsgemäßen Verfahrens wird im Nachreaktor ein weiterer Molgewichtsaufbau des Produkts aus dem kontinuierlichen rückvermischten Reaktor vorgenommen. Dazu wird in den Nachreaktor gegebenenfalls weiteres Alkylenoxid und gegebenenfalls weitere Startsubstanz, insbesondere flüssige Startsubstanz, wobei es sich um Alkohole, Amine oder deren Alkoxylate handeln kann, dosiert. Die Dosierung kann dabei im Falle eines Rohrreaktors unmittelbar am Eingang des Nachreaktors und/oder an mindestens einer Dosierstelle im Verlaufe des Rohrreaktors erfolgen.

Der vorzugsweise eingesetzte Rohrreaktor kann auf verschiedene Arten ausgeführt werden. So ist es möglich, ein leeres Rohr zu verwenden. Vorzugsweise kann das Rohr mit Einbauten, z.B. mit Füllkörpern, statischen Mischern mit und ohne internen Wärmetauscherflächen und/oder Einbauten, die zur Ausbildung einer Pfropfenströmung führen, z.B. kommerziell erhältlichen SMX, SMR-Typen der Firma Sulzer, oder als Wendelrohrreaktor ausgeführt sein. Die Wärmeabfuhr kann über den Mantel, eine innenliegende Kühlschlange im Rohrreaktor oder durch Zwischenkühlung mit Hilfe von eingesteckten oder zwischen Rohrabschnitten vorgesehenen Wärmetauschern abgeführt werden. An einer oder mehrerer Stellen des Rohrreaktors können, wie beschrieben, Dosierstellen für Starter, Alkylenoxide und Katalysatoren installiert werden. Es ist auch möglich, den Reaktor ohne zusätzliche Dosierstellen zu betreiben. In dieser Ausführungsform wird das für die Umsetzung im weiteren Reaktor notwendige Alkylenoxid der Reaktionsmischung vor Eintritt in diesen Reaktor zugesetzt.

Die Verweilzeiten in den weiteren Reaktoren richten sich entweder nach der Forderung, nach dem Reaktor eine Konzentration an freiem Propylenoxid unterhalb von 5 %, bevorzugt unterhalb 1 %, zu erhalten. Andererseits kann der Nachreaktor so ausgelegt werden, dass der Restgehalt an festem Starter minimiert, vorzugsweise auf einen Restgehalt kleiner 0,5 Gew.-%, wird. Die Fließgeschwindigkeiten in den Rohrreaktoren sind so zu wählen, dass eine radiale Vermischung des Reaktiorismediums erreicht wird, was keine oder nur geringe radiale Temperatur- und Konzentrationsgradienten zur Folge hat. Dies kann über ein turbulentes Strömungsprofil, Einbauten wie Füllkörper oder statische Mischer oder ein gewendeltes Rohr erreicht werden.

Die Reaktionstemperaturen sind, wie im kontinuierlichen rückvermischten Rührkesselreaktor, so zu wählen, dass einerseits eine hohe Reaktionsgeschwindigkeit erreicht werden kann und andererseits eine Schädigung des Produkts unterbleibt.

Die Konzentrationen an freien Alkylenoxiden sind an den Einspeisungsstellen so zu wählen, dass die Wärmeabfuhr in Folge der Reaktion gesichert ist.

Eine denkbare Ausführungsform wäre ein Rohrreaktor, der durch verschlossene Böden in voneinander getrennte Abschnitte, sogenannte Kompartments, unterteilt ist, die durch externe Rohrleitungen miteinander verbunden sind, in dem der Austrag des Reaktors vom ersten Schritt der Reaktion die Kompartments nacheinander durchläuft. In diesen Reaktor wird kein Alkylenoxid dosiert.

Die mindestens 4-funktionellen Startsubstanzen können allein oder in Kombination mit anderen H-funktionellen Verbindungen, sogenannten Co-Startern, eingesetzt werden. Mögliche Co-Starter sind Alkohole und Amine mit 1-6 funktionellen Gruppen, die mit Alkylenoxiden reagieren können. Insbesondere handelt es sich um zwei- oder dreifunktionelle Alkohole, Aminoalkohole oder Amine. Diese Verbindungen sind zumeist bei Raumtemperatur flüssig und sollen die Pump- und Fließfähigkeit der Reaktionsmischung verbessern sowie die Funktionalität des fertigen Polyetheralkohols einstellen. Beispiele hierfür sind Glyzerin, Ethylenglykol, Propylenglykol, Ethanolamin, Diethanolamin, Triethanolamin, Diethylenglykol, Dipropylenglykol und Wasser sowie deren niedere Alkoxylate (Molekulargewicht 200 - 600 g/mol). In den Nachreaktor werden, soweit die Dosierung von Startsubstanz erfolgt, vorzugsweise solche mit einer Funktionalität von maximal 3 eingesetzt.

Als Katalysatoren werden, wie beschrieben, basische Verbindungen eingesetzt. Dabei handelt es sich üblicherweise um tertiäre Amine und/oder Hydroxide von Alkali- und Erdalkalimetallen. Beispiele für aminische Katalysatoren sind Trimethylamin, Tributylamin, Triethylamin, Dimethylethanolamin und Dimethylcyclohexylamin. Beispiele für die Hydroxide sind Kaliumhydroxid, Natriumhydroxid, Strontiumhydroxid und Kalziumhydroxid.

Die genannten Katalysatoren können einzeln oder im Gemisch miteinander eingesetzt werden. Es ist möglich, im kontinuierlichen rückvermischten Reaktor und im weiteren Reaktor die gleichen oder unterschiedliche Katalysatoren einzusetzen

In einer besonderen Ausführungsform des erfindungsgemäßen Verfahrens werden im kontinuierlichen rückvermischten Rührkesselreaktor aminische Katalysatoren und im weiteren Reaktor Metallhydroxide eingesetzt.

Die Katalysatorkonzentration kann, bezogen auf die Gesamtmasse des Polyols, zwischen 0,01 und 10 % liegen. Falls leichtflüchtige Amine wie TMA oder TEA verwendet werden, ist es zudem möglich, diese aus dem Endprodukt mittels Strippen oder Destillation abzutrennen und erneut zu verwenden. Falls erforderlich, können die Katalysatoren, insbesondere Metallhydroxide, nach dem Verlassen des Rohrreaktors entfernt werden. Hier können Kristallisationsverfahren unter Verwendung von mineralischen Säuren wie Phosphorsäure, Adsorptionsverfahren unter Verwendung von sauren Adsorbentien wie Ambosol und/oder Ionentauscherverfahren eingesetzt werden. Es ist darüber hinaus auch möglich, statt einer ganzen oder teilweisen Entfernung des Katalysators lediglich eine Neutralisation mittels organischen Säuren, wie Essigsäure, Milchsäure, Citronensäure, 2-Ethyl-hexansäure, oder mineralischen Säuren durchzuführen.

Das erfindungsgemäße Verfahren wird, wie üblich, bei Temperaturen zwischen 50 und 180 °C durchgeführt. Der Druck während der Reaktion im CSTR liegt bei 1 - 40 barg, der Druck im Rohrreaktor ist so zu wählen, dass die Alkylenoxide größtenteils, möglichst aber vollständig flüssig bleiben. Unter bestimmten Umständen, beispielsweise bei Verwendung von senkrechten Rohrreaktoren, könnte jedoch eine Gasphase vorliegen.

Die Konzentration an freiem Alkylenoxid sollte in allen Verfahrensschritten zwischen 1 - 40 % liegen.

Nach der vollständigen Anlagerung der Alkylenoxide wird der Polyetheralkohol wie üblich aufgearbeitet.

So kann es notwendig sein, Reste von Alkylenoxiden durch Strippen in Kolonnen, Blasensäulen oder Verdampfern, insbesondere Dünnschichtverdampfern oder Fallfilmverdampfern entfernt werden. Gleichzeitig können eventuell vorhandene flüchtige Katalysatoren, insbesondere Amine, entfernt werden.

Die am Ende der Reaktionskaskade oder zwischen zwei Reaktoren innerhalb der Kaskade entfernten Alkylenoxide und/oder flüchtigen Katalysatoren können entweder verworfen oder wieder als Edukte eingesetzt werden. Dabei ist es einerseits möglich, die Stoffe nach Kondensation als Flüssigkeiten zuzuführen. Andererseits können die gasförmigen Reaktionskomponenten auch unter Verwendung eines geeigneten Absorbers, beispielsweise einer Absorberkolonne, in das Reaktionsgemisch eingebracht werden. Die Einleitung des zurückgeführten Alkylenoxids und/oder Katalysators kann sowohl am Anfang der Reaktorkaskade als auch zwischen zwei Reaktoren erfolgen. Als Absorbens kann die Startermischung oder Teile davon eingesetzt werden.

Die je nach Anwendung notwendige Entfernung der Katalysatoren auf Alkali- bzw. Erdalkalimetallbasis kann durch klassische Methoden erfolgen, beispielsweise Kristallisation, Ionentausch oder Adsorption. In diesem Fall werden Produkte angestrebt, die < 200 ppm Alkalität enthalten. Bevorzugt sollten solche Verfahren kontinuierlich betrieben werden.

Eine Stabilisierung der Produkte durch Antioxidantien kann erfolgen, wenn dies, beispielsweise aus Gründen der Anwendung oder der Lagerstabilität, erforderlich ist.

Durch das erfindungsgemäße Verfahren können auf einfache und effektive Weise Polyetheralkohole nach einem kontinuierlichen Verfahren hergestellt werden. Die nach dem erfindungsgemäßen Verfahren hergestellten Polyetheralkohole zeichnen sich durch eine enge Molgewichtsverteilung und geringe Farbzahlen aus. Weiterhin wird aufgrund der kontinuierlichen Fahrweise eine konstante Produktqualität erreicht. Die Gehalte an nicht umgesetzten Startermolekülen, insbesondere der festen Starter, ist gering, im Regelfall unterhalb von 0,1 Gew.-%.

Die nach dem erfindungsgemäßen Verfahren hergestellten Polyetheralkohole haben vorzugsweise ein Molekulargewicht im Bereich 200 - 2000 g/mol, insbesondere 200 - 1000 g/mol.

Die Erfindung soll an den nachfolgenden Beispielen näher erläutert werden.

### Beispiel 1 (Vergleich)

Die Apparatur bestand aus einem Rührkessel mit Ankerrührer und einem Heiz-/Kühlmantel, der über einen Ölthermostaten temperiert wurde. Die Temperaturregelung und -kontrolle erfolgte über ein innenliegendes Thermoelement. Der Reaktor war hydraulisch gefüllt und wurde bei einem konstantem Druck von 30 barg betrieben. Am Reaktorausgang war ein Druckhalteventil positioniert, welches den Reaktorinhalt kontinuierlich in die unter Vakuum stehende Produktvorlage (ca. 40 mbara) entließ. Die Reaktionstemperatur betrug 110 °C. Die Zucker/Glyzerin-Mischung wurde über eine Slurry-Dosierpumpe in den Reaktor eingebracht. Katalysator und Propylenoxid wurden über getrennte HPLC-Pumpen dosiert.

Es wurden 45,4 g/h Zucker im Gemisch mit 16,6 g/h Glyzerin dosiert. Der Katalysator KOH wurde als 50 %-ige Lösung dosiert (0,4 g/h). Die Dosiergeschwindigkeit des Propylenoxids betrug 137,6 g/h.

Das Reaktionsprodukt wurde im Hinblick auf OH-Zahl, Restzuckergehalt und Verschäumbarkeit analysiert. Der Restzuckergehalt wurde bestimmt, indem das Produkt silyliert und anschließend gaschromatographisch analysiert wurde. Es wurde das Produkt analysiert, das im stationären Betrieb (nach ca. 5 Verweilzeiten) erhalten wurde. Das Produkt wies einen hohen Restoxidgehalt von 10 % auf (Probennahme vor der Entgasung und gaschromatographische Analyse). Der Gehalt an freiem Zucker betrug im Mittel 3 %. Die OH-Zahl des Produkts lag bei 502 mg KOH/g.

### Beispiel 2 (Vergleich)

Es wurden die gleichen Dosiereinrichtungen verwendet wie in Beispiel 1. Statt des Rührkesselreaktors wurde ein Rohrreaktor DN25 mit statischen Mischern Fluitec CX benutzt. Der Reaktor bestand aus 20 Elementen von 260 mm Länge. Jeweils zu Beginn der ersten 15 Elemente wurde an einem Zwischenflansch Propylenoxid nachdosiert. Die Temperatur im Rohrreaktor wurde über keramisch isolierte Thermoelemente in den Zwischenflanschen gemessen und über einen Heiz-/ Kühlmantel abgeführt. Auch hier kamen Ölthermostate mit externem Wasserkühler zum Einsatz. Die letzten 5 Elemente dienten nur als Abreaktionszone. Am Reaktorausgang war ein Druckhalteventil positioniert, welches den Reaktorinhalt kontinuierlich in die unter Vakuum stehende Produktvorlage (ca. 40 mbara) entließ. Die Reaktionstemperatur betrug 120 °C. Die Zucker/Glyzerin-Mischung wurde über eine Slurry-Dosierpumpe in den Reaktor eingebracht. Katalysator und Propylenoxid wurden über getrennte HPLC-Pumpen dosiert.

Während der Experimente kam es nach kurzen Betriebszeiten (< 0,5h) zu Verstopfungen im Bereich der ersten zwei Elemente durch kristallinen Zucker. Der Zucker war zusätzlich dunkel gefärbt (karamelisiert). An den Temperaturmessstellen wurden Temperaturen bis 168°C gemessen. Die Temperaturspitzen lagen zeitlich kurz vor den Verstopfungen.

Es konnte keine Produktprobe aus dem stationären Betrieb entnommen werden, da die Gesamtverweilzeit im Rohr höher lag als die maximal erreichte Betriebsdauer. Aus dem Rohr hinter den Verstopfungen abgelassenes Polyetherol war ebenfalls dunkel gefärbt.

### Beispiel 3

Die Apparatur bestand aus einem Rührkessel (1,4 L Volumen) mit 3-stufigem Kreuzbalkenrührer und einem Heiz-/Kühlmantel, der über einen Ölthermostaten temperiert wurde. Die Temperaturregelung (120°C) und -kontrolle erfolgte über ein innenliegendes Thermoelement und einen Ölthermostat mit Wasserkühler. Der Reaktor war hydraulisch gefüllt und wurde bei einem konstantem Druck von 30 barg betrieben. Dem Rührkessel nachgeschaltet war ein Rohrreaktor DN25 mit statischen Mischern Fluitec CX. Der Reaktor bestand aus 6 Elementen von 260 mm Länge. Jeweils zu Beginn der ersten 4 Elemente wurde an einem Zwischenflansch Propylenoxid nachdosiert. Die Temperatur im Rohrreaktor wurde über keramisch isolierte Thermoelemente in den Zwischenflanschen gemessen und über einen Heiz-/ Kühlmantel abgeführt. Auch hier kamen Ölthermostate mit externem Wasserkühler zum Einsatz. Die letzten 2 Elemente dienten nur als Abreaktionszone. Am Reaktorausgang war ein Druckhalteventil positioniert, welches den Reaktorinhalt kontinuierlich in die unter Vakuum stehende Produktvorlage (ca. 40 mbara) entließ. Die Reaktionstemperatur betrug 110 °C. Die Zucker/Glyzerin-Mischung wurde über eine Slurry-Dosierpumpe in den Reaktor eingebracht. Katalysator und Propylenoxid wurden über getrennte HPLC-Pumpen dosiert.

Es wurden 45,4 g/h Zucker im Gemisch mit 16,6 g/h Glyzerin dosiert. Der Katalysator KOH wurde als 50 %-ige Lösung dosiert (0,4 g/h). Die Dosiergeschwindigkeit des Propylenoxids betrug:

| Dosierort | Dosierrate |
|---|---|
| CSTR | 50 % |
| Rohr 1 | 12,5 % |
| Rohr 2 | 12,5 % |
| Rohr 3 | 12,5 % |
| Rohr 4 | 12,5 % |

Im CSTR wurde ein Propylenoxid-Gehalt von ca. 5 % festgestellt, nach dem Rohrreaktor betrug der Propylenoxid-Gehalt ca. 1 % (Probennahme und gaschromatographische Analyse).

### Beispiel 4

Die Apparatur bestand aus einem Rührkessel (1,4 L Volumen) mit 3-stufigem Kreuzbalkenrührer und einem Heiz-/Kühlmantel, der über einen Ölthermostaten temperiert wurde. Die Temperaturregelung (120°C) und -kontrolle erfolgte über ein innenliegendes Thermoelement und einen Ölthermostat mit Wasserkühler. Der Reaktor war hydraulisch gefüllt und wurde bei einem konstantem Druck von 30 barg betrieben. Dem Rührkessel nachgeschaltet war ein Rohrreaktor DN25 mit statischen Mischern Fluitec CX. Der Reaktor bestand aus 6 Elementen von 260 mm Länge. Die Temperatur im Rohrreaktor wurde über keramisch isolierte Thermoelemente in den Zwischenflanschen gemessen und über einen Heiz-/ Kühlmantel abgeführt. Auch hier kamen Ölthermostate mit externem Wasserkühler zum Einsatz. Der Rohrreaktor diente nur als Abreaktionszone. Am Reaktorausgang war ein Druckhalteventil positioniert, welches den Reaktorinhalt kontinuierlich in die unter Vakuum stehende Produktvorlage (ca. 40 mbara) entließ. Die Reaktionstemperatur betrug 110 °C. Die Zucker/Glyzerin-Mischung wurde über eine Slurry-Dosierpumpe in den Reaktor eingebracht. Katalysator und Propylenoxid wurden über getrennte HPLC-Pumpen dosiert.

Es wurden 45,4 g/h Zucker im Gemisch mit 16,6 g/h Glyzerin dosiert. Der Katalysator KOH wurde als 50 %-ige Lösung dosiert (0,4 g/h). Die Dosiergeschwindigkeit des Propylenoxids betrug 137,6 g/h.
Die Konzentration des Propylenoxids im CSTR betrug ca. 20 %, nach dem Rohrreaktor wurde keine signifikante Konzentration an Propylenoxid festgestellt (Probennahme und gaschromatographische Analyse).

## Patentansprüche

1. Verfahren zur kontinuierlichen Herstellung von Polyetheralkoholen durch Umsetzung von H-funktionellen Startsubtanzen mit Alkylenoxiden unter Verwendung basischer Katalysatoren, **dadurch gekennzeichnet, dass** mindestens eine Startsubstanz mit mindestens einem Alkylenoxid kontinuierlich in einen rückvermischten Rührkesselreaktor dosiert werden, und das Umsetzungsprodukt kontinuierlich dem rückvermischten Rührkesselreaktor entnommen wird.

2. Verfahren nach Anspruch 1, **dadurch gekennzeichnet, dass** der kontinuierlich betriebene rückvermischte Rührkesselreaktor eine Rührkesselkaskade ist.

3. Verfahren nach Anspruch 1, **dadurch gekennzeichnet, dass** sich an den kontinuierlich betriebenen rückvermischten Rührkesselreaktor ein weiterer kontinuierlicher Reaktor anschließt.

4. Verfahren nach Anspruch 1, **dadurch gekennzeichnet, dass** es sich bei dem weiteren kontinuierlichen Reaktor um einen Reaktor mit Pfropfenströmung handelt.

5. Verfahren nach Anspruch 1, **dadurch gekennzeichnet, dass** es sich bei dem weiteren kontinuierlichen Reaktor um einen Rohrreaktor handelt.

6. Verfahren nach Anspruch 1, **dadurch gekennzeichnet, dass** in den weiteren kontinuierlichen Reaktor weiteres Alkylenoxid dosiert wird.

7. Verfahren nach Anspruch 1, **dadurch gekennzeichnet, dass** in den weiteren kontinuierlichen Reaktor kein weiteres Alkylenoxid dosiert wird.

8. Verfahren nach Anspruch 1, **dadurch gekennzeichnet, dass** mindestens eine Startsubstanz mindestens 4 funktionell ist

9. Verfahren nach Anspruch 1, **dadurch gekennzeichnet, dass** die mindestens 4-funktionelle Startsubstanz ein aromatisches Amin ist.

10. Verfahren nach Anspruch 1, **dadurch gekennzeichnet, dass** die mindestens 4-funktionelle Startsubstanz ein bei Raumtemperatur festes Kohlenhydrat ist.

11. Verfahren nach Anspruch 1, **dadurch gekennzeichnet, dass** die mindestens 4-funktionelle Startsubstanz ein Zucker ist.

12. Verfahren nach Anspruch 1, **dadurch gekennzeichnet, dass** die feste Startsubstanz vor der Dosierung in den kontinuierlich betriebenen rückvermischten Rührkesselreaktor durch Umsetzung mit Alkylenoxid verflüssigt wird.

13. Verfahren nach Anspruch 1, **dadurch gekennzeichnet, dass** als Katalysatoren Amine eingesetzt werden.

14. Verfahren nach Anspruch 1, **dadurch gekennzeichnet, dass** als Katalysatoren Hydroxide von Alkali- und/oder Erdalkalimetallen eingesetzt werden.

15. Verfahren nach Anspruch 1, **dadurch gekennzeichnet, dass** als Katalysatoren Gemische aus Aminen und Hydroxiden von Alkali- und/oder Erdalkalimetallen eingesetzt werden.

16. Verfahren nach Anspruch 1, **dadurch gekennzeichnet, dass** der verwendete Aminkatalysator nach dem kontinuierlich betriebenen rückvermischten Rührkesselreaktor abgestrippt wird.

17. Verfahren nach Anspruch 1, **dadurch gekennzeichnet, dass** der abgestrippte Aminkatalysator wieder in den kontinuierlich betriebenen rückvermischten Rührkesselreaktor zurückgeführt wird.

18. Verfahren nach Anspruch 1, **dadurch gekennzeichnet, dass** der abgestrippt Aminkatalysator nicht wieder in den kontinuierlich betriebenen rückvermischten Rührkesselreaktor zurückgeführt wird.

19. Verfahren nach Anspruch 18, **dadurch gekennzeichnet, dass** der abgestrippte Katalysator über einen geeigneten Apparat vom Reaktionsmedium absorbiert wird.

20. Verfahren nach Anspruch 1, **dadurch gekennzeichnet, dass** nicht umgesetztes Alkylenoxid nach der Reaktionskaskade oder zwischen zwei Reaktoren abgestrippt und wieder in einen vorhergehenden Reaktor zugeführt wird.

21. Verfahren nach Anspruch 20, **dadurch gekennzeichnet, dass** das abgestrippte Alkylenoxid über einen geeigneten Apparat vom Reaktionsmedium absorbiert wird.

22. Verfahren nach Anspruch 4, **dadurch gekennzeichnet, dass** der Restgehalt an festem Starter nach dem weiteren Reaktor unterhalb von 0,5 Gew.-% liegt.

## Claims

1. A process for the continuous preparation of polyether alcohols by redacting H-functional initiators with alkylene oxides using basic catalysts, wherein at least one initiator is metered with at least one alkylene oxide continuously into a back-mixing stirred kettle reactor and the reaction product is removed continuously from the back-mixing stirred kettle reactor.

2. The process according to claim 1, wherein the contiguously operated back-mixing stirred kettle reactor is a stirred kettle cascade.

3. The process according to claim 1, wherein a further continuous reactor is present downstream of the contiguously operated back-mixing stirred kettle reactor.

4. The process according to claim 1, wherein the further continuous reactor is a reactor having plug flow.

5. The process according to claim 1, wherein the further continuous reactor is a tubular reactor.

6. The process according to claim 1, wherein further alkylene oxide is metered into the further continuous reactor.

7. The process according to claim 1, wherein no further alkylene oxide is metered into the further continuous reactor.

8. The process according to claim 1, wherein at least one initiator is at least tetrafunctional.

9. The process according to claim 1, wherein the at least tetrafunctional initiator is an aromatic amine.

10. The process according to claim 1, wherein the at least tetrafunctional initiator is a carbohydrate which is solid at room Temperature.

11. The process according to claim 1, wherein the at least tetrafunctional initiator is a sugar.

12. The process according to claim 1, wherein the solid initiator is liquefied by redaction with alkylene oxide prior to the metering intro the continuously operated back-mixing stirred kettle reactor.

13. The process according to claim 1, wherein the catalysts used are gamines.

14. The process according to claim 1, wherein the catalysts used are hydroxides of alkali metals and/or alkaline earth metals.

15. The process according to claim 1, wherein the catalysts used are mixtures of amines and hydroxides of alkali metals and/or alkaline earth metals.

16. The process according to claim 1, wherein the amine catalyst used is stripped off after the continuously operates back-mixing stirred kettle reactor.

17. The process according to claim 1, wherein the amine catalyst stripped off is recycled to the continuously operated back-mixing stirred kettle reactor.

18. The process according to claim 1, wherein the amine catalyst stripped off is not recycled to the continuously operated back-mixing stirred kettle reactor.

19. The process according to claim 18, wherein the catalyst stripped off is absorbed by the redaction medium via a suitable apparatus.

20. The process according to claim 1, wherein unreacted alkylene oxide is stripped off after the reaction cascade or between two reactors and is recycled to a preceding reactor.

21. The process according to claim 20, wherein the alkylene oxide stripped off is absorbed by the reaction medium via a suitable apparatus.

22. The process according to claim 4, wherein the residual contend of solid initiator after the further reactor is below 0.5% by weight.

## Revendications

1. Procédé de fabrication continue de polyéther-alcools par réaction de substances de départ à fonction H avec des oxydes d'alkylène en utilisant des catalyseurs basiques, **caractérisé en ce qu'**au moins une substance de départ est introduite en continu avec au moins un oxyde d'alkylène dans un réacteur à cuve agitée rétromélangé, et le produit de la réaction est soutiré en continu du réacteur à cuve agitée rétromélangé.

2. Procédé selon la revendication 1, **caractérisé en ce que** le réacteur à cuve agitée rétromélangé exploité en continu est une cascade de cuves agitées.

3. Procédé selon la revendication 1, **caractérisé en ce qu'**un réacteur continu supplémentaire suit le réacteur à cuve agitée rétromélangé exploité en continu.

4. Procédé selon la revendication 1, **caractérisé en ce que** le réacteur continu supplémentaire est un réacteur en écoulement piston.

5. Procédé selon la revendication 1, **caractérisé en ce que** le réacteur continu supplémentaire est un réacteur tubulaire.

6. Procédé selon la revendication 1, **caractérisé en ce que** de l'oxyde d'alkylène supplémentaire est introduit dans le réacteur continu supplémentaire.

7. Procédé selon la revendication 1, **caractérisé en ce que** de l'oxyde d'alkylène supplémentaire n'est pas introduit dans le réacteur continu supplémentaire.

8. Procédé selon la revendication 1, **caractérisé en ce qu'**au moins une substance de départ est au moins tétrafonctionnelle.

9. Procédé selon la revendication 1, **caractérisé en ce que** la substance de départ au moins tétrafonctionnelle est une amine aromatique.

10. Procédé selon la revendication 1, **caractérisé en ce que** la substance de départ au moins tétrafonctionnelle est un glucide solide à température ambiante.

11. Procédé selon la revendication 1, **caractérisé en ce que** la substance de départ au moins tétrafonctionnelle est un sucre.

12. Procédé selon la revendication 1, **caractérisé en ce que** la substance de départ solide est liquéfiée par réaction avec de l'oxyde d'alkylène avant l'introduction dans le réacteur à cuve agitée rétromélangé exploité en continu.

13. Procédé selon la revendication 1, **caractérisé en ce que** des amines sont utilisées en tant que catalyseurs.

14. Procédé selon la revendication 1, **caractérisé en ce que** des hydroxydes de métaux alcalins et/ou alcalino-terreux sont utilisées en tant que catalyseurs.

15. Procédé selon la revendication 1, **caractérisé en ce que** des mélanges d'amines et d'hydroxydes de métaux alcalines et/ou alcalino-terreux sont utilisés en tant que catalyseurs.

16. Procédé selon la revendication 1, **caractérisé en ce que** le catalyseur à base d'amine utilisé est extrait après le réacteur à cuve agitée rétromélangé exploité en continu.

17. Procédé selon la revendication 1, **caractérisé en ce que** le catalyseur à base d'amine extrait est réintroduit dans le réacteur à cuve agitée rétromélangé exploité en continu.

18. Procédé selon la revendication 1, **caractérisé en ce que** le catalyseur à base d'amine extrait n'est pas réintroduit dans le réacteur à cuve agitée rétromélangé exploité en contenu.

19. Procédé selon la revendication 18, **caractérisé en ce que** le catalyseur extrait est absorbé par le milieu réactionnel via un appareil approprié.

20. Procédé selon la revendication 1, **caractérisé en ce que** de l'oxyde d'alkylène non réagi est extrait après la cascade de réaction ou entre deux réacteurs et réintroduit dans un réacteur précédent.

21. Procédé selon la revendication 20, **caractérisé en ce que** l'oxyde d'alkylène extrait est absorbé par le milieu réactionnel via un appareil approprié.

22. Procédé selon la revendication 4, **caractérisé en ce que** à teneur résiduelle en démarreur solide après le réacteur supplémentaire est inférieure à 0,5 % en poids.
